# EUROPEAN PATENT APPLICATION

(11) **EP 2 846 508 A1**
(43) Date of publication of application: **11.03.2015**
(21) Application number: 13306214.1
(22) Date of filing: 05.09.2013
(51) Int. Cl.: H04L 29/06, H04L 9/32

(54) **Method for performing secure wireless communications**

(71) Applicant: Gemalto SA, 92190 Meudon (FR)
(72) Inventor: Marseille, François-Xavier, 92190 Meudon (FR); Chafer, Sylvain, 92190 Meudon (FR)
(74) Representative: Cour, Pierre

(57) **Abstract**

The invention relates to a method of securing a wireless communication between a first communication device (1) comprising a touch screen (2) and a second communication device (6) by using the communication through the touch screen to secure the wireless communication. To that purpose, the method comprises a a verification step (103) wherein at least one security data is exchanged between the first and the second communication devices (1, 7) through the touch screen (2) while the wireless communication channel is open.

## Description

### TECHNICAL FIELD

The present invention relates to a method for performing secure wireless communications between two devices, one of them having a touch screen.

### BACKGROUND

The European patent application filed on July 12, 2013 under the n °13305992.3 (hereinafter the document D1) describes a method for establishing a secure wireless communication between a first communication device having a touch screen and a second communication device such as the communication device described in the patent application WO2013/098341 (hereinafter the document D2). In the document D1, the method described in the document D2 is used to bootstrap a wireless communication by exchanging the required pieces of information directly through the touch screen of the second communication device. This method provides then a secure way to establish a wireless communication between a first communication device having a touch screen and a second communication device and consequently, the method can be used to perform secure transactions by wireless communication. For example, the second communication device can be a token comprising authentication means enabling to electronically certify the identity of the person performing the transaction. Once the communication has been established between the first and the second communication devices, the second communication device enables to encrypt/decrypt/certify/sign messages or documents.

Unfortunately, having a secure way to establish the wireless connection does not protect against hijack or fraudulent usage of it. As a matter of fact, once the wireless link is started, some applications may use the opened link if it has not been cut by the user.

Hereafter are two examples to illustrate possible issues, especially when the wireless communication is a Bluetooth low energy communication.

Concerning fraudulent usage, as the connection between the secure embedded device and the Tablet/Handset is wireless in general and Bluetooth Low-energy in particular, it can still be maintained to distance up to 150m (open field).

As a consequence, it will be possible for an attacker to use the credential issued by the secure embedded device by 'borrowing' the tablet or handset while its owner is in not so close proximity even in the case he has kept the secure token with him.

A well known solution to this issue is to use a proximity or distance measurement to automatically cut the connection at 10 meters.

Unfortunately, it is also well known that these distance measurements based on signal level (RSSI) are not reliable especially in perturbed environment, leading to tamper user convenience with security: the 10 m open field becoming 20 cm in a noisy environment, resulting in unexpected disconnections.

Concerning connection hijacking, as the wireless connection is established between hardware layers of the two communication devices, control of applicative layers on what is actually happening on the physical link is quite limited.

As a consequence, it will be possible for a malicious application running on the Tablet/handset to try to attack the secure embedded device. This is similar of what can happen on a PC when a smart card is inserted on a reader: any application may have access to the smart card services.
A well known solution to mitigate this issue is to use secure channel to have point to point security between the peers.

Unfortunately, it is not completely bullet proof. In particular, as one of the peers is an application running on the tablet or handset, it could be attacked, reverse engineered to get access to the secrets used by the security layer.

### SUMMARY OF THE INVENTION

The technical problem to solve is then to provide a method to perform secure wireless communication between a first device having a touch screen and a second device having an interface to communicate with the first device through its touch screen.

To this purpose, the invention suggests to secure, monitor and control the wireless communication thanks to the communication channel established through the touch screen of the first device. The invention suggests then to use the communication channel through the touch screen to ensure that the two communication devices are in physical contact and to only allow the wireless communication if the two communication devices are in physical contact.

More precisely, one aspect of the invention relates to a method of securing a wireless communication between:
- a first communication device comprising :
   - a touch screen,
   - a first wireless communication interface configured to exchange information through a wireless communication channel with a second wireless communication interface, and
- a second communication device comprising :
   - a screen communication interface configured to exchange information with a first communication device comprising a touch screen with which the second screen communication interface is in contact and
   - a second wireless communication interface configured to exchange information through a wireless communication channel with a first wireless communication interface,
the method comprising the following steps:
- A contact step wherein the second screen communication interface is placed in contact with the touch screen;
- An establishment step wherein a wireless communication channel is opened between the first and the second wireless communication interfaces; the method further comprising:
- A verification step wherein at least one security data is exchanged between the first and the second communication devices through the touch screen while the wireless communication channel is open.

The verification step enables to check is the second device is still in physical contact with the touch screen of the first device while the wireless communication channel is open in order to secure the wireless communication channel. As a matter of fact, if the verification step can be performed, i.e. if data can be exchanged through the touch screen, it means that the screen communication interface is in contact with the touch screen of the first device. The method according to the first aspect of the invention can also comprise one or several of the following features, taken individually or according to all possible technical combinations.

Advantageously, the method further comprises a control step wherein the wireless communication channel is controlled in function of the verification step. Thus, according to the invention, the communication through the touch screen is used as a side channel to secure, monitor and control the wireless communication channel between the first and the second communication channel since the data exchanged through the touch screen are used to control the wireless communication channel.

Advantageously, the control step comprises:
- a step of maintaining the wireless communication channel open while the verification step can be performed; or
- a step of interrupting the wireless communication channel as soon as the verification step cannot be performed.

Thus, the method enables to cut the wireless communication channel if the first and second communication devices are not any more in contact to prevent against fraudulent usage of the wireless communication channel or to keep the wireless communication channel open while the two devices are still in physical contact.

Advantageously, the verification step comprises a reception step wherein the first communication device receives at least one security data from the second communication device through the touch screen. Accordingly, the first communication device receives from the second communication device, through the touch screen, security data indicating that the second communication device, and more particularly its screen communication interface is in contact with the touch screen. The method used to send data through the screen communication interface in contact with the touch screen from the second communication device to the first communication device is preferably the method described in the document WO2013/098341.

The security data may comprise data enabling to secure the wireless link and/or data enabling to dynamically renew the security properties used by the wireless link.

According to one embodiment, the control step comprises a step of configuring the wireless communication channel with the security data. The control step enables then to control the wireless link with the data received through the touch screen.

The control step is preferably a step of controlling the first wireless communication interface according to the security data received by the first communication device through the touch screen.

The verification step can also comprise a step of sending data from the first communication device toward the second communication device through the touch screen. The method used to receive data through the screen communication interface in contact with the touch screen from the first communication device to the second communication device is preferably the method described in the document WO2013/098341.

In that case, the control step may also be a step of controlling the second wireless communication interface according to the security data received by the second communication device through the touch screen.

According to different embodiments:
- the verification step may be performed periodically and/or
- the verification step may be performed after a request. In that case, the method preferably further comprises at least one request step wherein the first communication device sends a request to the second communication device through the touch screen, the verification step being performed after each request step. The request step may be performed before each exchange of sensitive data through the wireless communication channel.

A second aspect of the invention concerns a first communication device comprising at least:
- a touch screen,
- a first wireless communication interface configured to exchange information through a wireless channel with a second wireless communication interface;
- verification means configured to control the first communication device so that it exchanges at least one security data through the touch screen with a second communication device having a screen communication interface in contact with the touch screen when a wireless communication channel is established between the first and the second communication devices.

The first communication device preferably further comprises control means configured to control the first wireless communication interface in function of the security data exchanged through the touch screen.

Advantageously, the control means are configured to :
- Maintain the wireless communication channel open while security data can be exchanged through the touch screen;
- Interrupt the wireless communication channel as soon as security data cannot be exchanged anymore through the touch screen.

According to different embodiments, the first communication device may be a mobile phone, a tablet, a handset.

The wireless communication channel is preferably a Bluetooth low energy link, but it may also be another wireless link like Bluetooth, zigbee...

A third aspect of the invention concerns a second communication device, comprising:
- a screen communication interface configured to exchange information with a first communication device comprising a touch screen with which the screen communication interface is in contact and
- a second wireless communication interface configured to exchange information through a wireless communication channel with a first wireless communication interface;
- second verification means configured to control the screen communication interface so that the second communication interface exchanges at least one security data with a first communication device having a touch screen, through said touch screen, the screen communication interface being in contact with the touch screen.

The second communication device is preferably a token, a card, a mobile phone, a tablet, a handset...

The second communication device preferably comprises identification means enabling to identify electronically a user. These identification means may be session keys, passwords, chip, signature, encryption or decryption keys...

The second communication device may also comprise second control means configured to control the second wireless communication interface in function of the security data exchanged through the touch screen.

### BRIEF DESCRIPTION OF THE DRAWINGS

Figure 1 represents a first communication device according to one embodiment of the invention and a second communication device according to one embodiment of the invention;
Figure 2 represents the steps of a method according to one embodiment of the invention.

### DETAILED DESCRIPTION

The present invention will now be described with reference to the accompanying drawings. The drawings are intended to provide one example of how the invention can be implemented and are not intended to limit the applicability of the present invention.

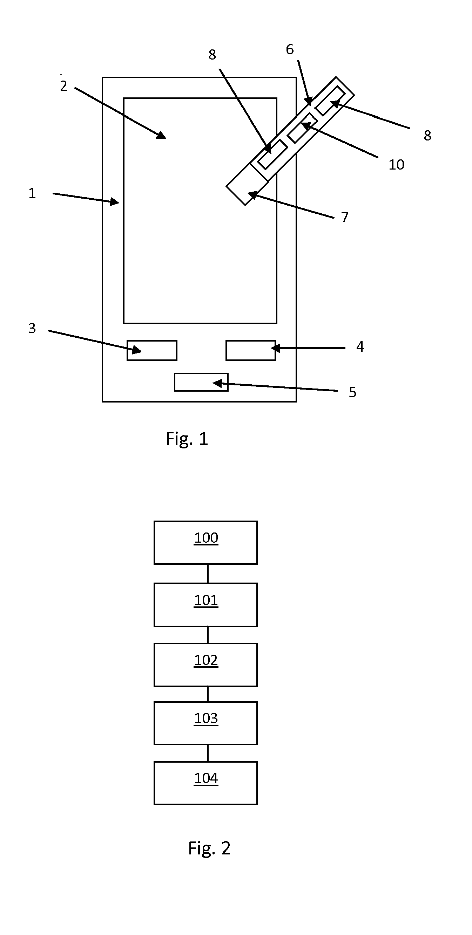

Figure 1 represents a first communication device 1 and a second communication device 6 according to one embodiment of the invention.

The first communication device 1 may be a tablet, a mobile phone or a handset.

The first communication device 1 comprises:
- a touch screen 2,
- a first wireless communication interface 3 configured to exchange information through a wireless communication channel with a second wireless communication interface;
- verification means 4 configured to control the first communication device 1 so that it exchanges at least one security data through the touch screen 2 with a second communication device having a screen communication interface in contact with the touch screen while a wireless communication channel is established between the first and the second communication devices;
- control means 5 configured to control the first wireless communication interface in function of the security data exchanged through the touch screen.

The second communication device 6 is a device comprising identification means enabling to electronically identify a user via certificates, keys, keywords... The second communication device 6 can be a token, an identification card, another mobile phone, another tablet, another handset... The second communication device 6 comprises:
- a screen communication interface 7 configured to exchange information with a first communication device 1 comprising a touch screen 2 with which the screen communication interface 7 is in contact and
- a second wireless communication interface 8 configured to exchange information through a wireless communication channel with a first wireless communication interface 3;
- second verification means 9 configured to control the screen communication interface 7 so that the second communication interface 7 exchanges at least one security data with a first communication device 1 having a touch screen 2, through said touch screen 2, the screen communication interface 7 being in contact with the touch screen 2.

A method according to one embodiment of the invention will now be described with reference to figure 2.

The second communication device 6, and more particularly its screen communication interface 7, is first put in contact with the touch screen 2 of the first communication device 1 (step 101). The method comprises then a step 102 of establishing a wireless communication channel between the first wireless communication interface 3 and the second wireless communication interface 8. The wireless communication channel is preferably a Bluetooth low energy link. The pieces of information needed to bootstrap the wireless communication channel are preferably exchanged through the touch screen 2 of the first communication device. The method used to establish the wireless communication channel is preferably the one described in the document D1.

Once connected to the first communication device 1, the second communication device 6 enables to identify electronically a user. For that purpose, the second communication device 6 comprises identifying means 10 enabling to identify the user. These identification means can be images, certificates, session keys, passwords, encryption or decryption keys stored in a memory. Once connected to the first communication device, the second communication device 6 enables to sign documents, to decrypt or encrypt documents or messages. As a matter of fact, once the wireless communication channel is open, the second communication device 6 may be requested via the wireless communication channel to identify the user a task such as encryption, decryption, authenticating, or signature of documents or messages.

However, it may occur that the user needs to move while the wireless communication channel is still open, and that a fraudulent agent takes advantage of that displacement to use the second communication device to encrypt, decrypt, authenticate, sign documents or messages.

To avoid that, the method according to one embodiment of the invention comprises a verification step 103 which aims at verifying that the second communication device 6 is still in contact with the first communication device 1. To that purpose, during the verification step, the first communication device 1 exchanges security data with the second communication device 6 via the touch screen. According to different embodiments, the step of exchanging data through the touch screen may be:
- a step wherein the first communication device sends security data to the second communication device. To that purpose, the first communication device can send visual signals thanks to the touch screen to the screen communication interface and/or
- a step wherein the second communication device sends security data to the first communication device. To that purpose, the screen communication interface can send tactile signals to the first communication device through the touch screen.

More precisely, the method used for the exchange of information through the touch screen is preferably the method described in the document WO2013/098341.

If the screen communication interface 7 is still in physical contact with the touch screen 2, the exchange can be performed. Otherwise, if the screen communication interface 7 is not anymore in contact with the touch screen 2, the exchange is impossible.

The method comprises then a step of control 104 of the wireless communication channel according to the result of the verification step 103. More precisely, if the exchange of security data has been performed during the verification step 103, it means that the screen communication interface 7 is in physical contact with the touch screen, and consequently, during the control step, the wireless communication channel is maintained open. On the contrary, if the exchange of security data has not been performed, it means that the screen communication interface 7 is not anymore in physical contact with the touch screen 2 and consequently, the control step 104 is a step of cutting the wireless communication channel between the two communication devices 1, 6 in order to avoid any fraudulent usage of the wireless communication channel.

Besides, the exchange of data once the wireless communication channel is open enables not only to ensure that the two communication devices 1, 7 are still in physical contact, but also to exchange security information to secure the wireless communication channel in order to dynamically renew the security properties used by the wireless communication channel. For example, the security data exchanged during the verification step can be session keys or encryption keys, enabling to renew the session keys or encryption keys used in the wireless communication channel. In that case, the security data exchanged during the verification step may be used to configure the wireless communication channel in order to keep it secure. More precisely, during the control step, the control means 5 of the first communication device may use the security data received from the second communication device 6 to configure the first wireless communication interface 3. The second communication device 6 may also comprise second control means enabling to configure the second wireless communication interface according to the security data received by the second communication device.

According to different embodiments, the verification step 103 may be performed periodically in order to check periodically in the two communication devices are still in contact, and/or the verification step 103 may be performed at request. For example, a request for verification step may be performed before each exchange of sensible data via the wireless communication channel or before each encryption, decryption, signature, authentication of documents or messages via the wireless link.

The communication through the touch screen is then used as a side channel enabling to control the wireless communication channel.

While the present invention has been particularly described with reference to the preferred embodiments, it should be readily apparent to those of ordinary skill in the art that changes and modifications in form and details may be made without departing from the scope of the invention. For example, even if the invention has been described for the establishment of a Bluetooth low energy link, it could also be used with other wireless technology like Bluetooth, Zigbee or any other RF communication standard.

## Claims

**1.** Method of securing a wireless communication between:
- a first communication device (1) comprising :
• a touch screen (2),
• a first wireless communication interface (3) configured to exchange information through a wireless communication channel with a second wireless communication interface (7), and
- a second communication device (6) comprising :
• a screen communication interface (7) configured to exchange information with a first communication device (1) comprising a touch screen (2) with which the second screen communication interface (7) is in contact and
• a second wireless communication interface (8) configured to exchange information through a wireless communication channel with a first wireless communication interface (3),
the method comprising the following steps:
- A contact step (101) wherein the second screen communication interface (7) is placed in contact with the touch screen (2);
- An establishment step (102) wherein a wireless communication channel is opened between the first and the second wireless interfaces (3, 7);
the method being **characterized in that** it further comprises:
- A verification step (103) wherein at least one security data is exchanged between the first and the second communication devices (1, 7) through the touch screen (2) while the wireless communication channel is open.

**2.** Method according to the previous claim, further comprising a control step (104) wherein the wireless communication channel is controlled in function of the verification step (103).

**3.** Method according to the previous claim, wherein the control step (104) comprises:
- a step of maintaining the wireless communication channel open while the verification step can be performed; or
- a step of interrupting the wireless communication channel as soon as the verification step cannot be performed.

**3.** Method according to any of claims 2 or 3, wherein the control step (104) further comprises a step of configuring the wireless communication channel with the exchanged security data.

**5.** Method according to any of the previous claims, wherein the verification step (103) is performed periodically.

**6.** Method according to any of the previous claims, wherein the verification step (103) is performed after a request.

**7.** First communication device (1) comprising at least:
- a touch screen (2),
- a first wireless communication interface (3) configured to exchange information through a wireless communication channel with a second wireless communication interface (8);
- verification means (4) configured to control the first communication device (1) so that it exchanges at least one security data through the touch screen (2) with a second communication device (6) having a screen communication interface (7) in contact with the touch screen (2) when a wireless communication channel is established between the first and the second communication devices (1, 7).

**8.** First communication device (1) according to the previous claim, further comprising control means (5) configured to control the first wireless communication interface (in function of the security data exchanged through the touch screen.

**9.** First communication device (1) according to any of claims 7 or 8, wherein the control means (5) are configured to:
- Maintain the wireless communication channel open while security data can be exchanged through the touch screen (2);
- Interrupt the wireless communication channel as soon as security data cannot be exchanged anymore through the touch screen (2).

**10.** Second communication device (6) comprising:
- a screen communication interface (7) configured to exchange information with a first communication device (1) comprising a touch screen (2) with which the screen communication interface (7) is in contact and
- a second wireless communication interface (8) configured to exchange information through a wireless communication channel with a first wireless communication interface (8);
- second verification means (9) configured to control the screen communication interface (7) so that the second communication interface (7) exchanges at least one security data with a first communication device (1) having a touch screen (2), through said touch screen (2), the screen communication interface (7) being in contact with the touch screen (2).

**11.** Second communication device (6) according to the previous claim, further comprising identification means (10) enabling to identify electronically a user.
